Europäisches Patentamt

European Patent Office

Office européen des brevets

(11) Veröffentlichungsnummer: **0 489 278 A1**

## (12) EUROPÄISCHE PATENTANMELDUNG

(21) Anmeldenummer: **91119309.2**

(22) Anmeldetag: **13.11.91**

(51) Int. Cl.⁵: **B65G 15/00**

(30) Priorität: **03.12.90 DE 4038512 U**

(43) Veröffentlichungstag der Anmeldung:
**10.06.92 Patentblatt 92/24**

(84) Benannte Vertragsstaaten:
**DE DK GB SE**

(71) Anmelder: **HEINZ NIENSTEDT MASCHINENFABRIK GMBH**
**Recklinghäuser Strasse 90-92**
**W-4358 Haltern 1(DE)**

(72) Erfinder: **Rosenberger, Jörg**
**Zum Dachsberg 15**
**W-4358 Haltern-Flaesheim(DE)**
Erfinder: **Book, Franz**
**Heinrich-Rumpf-Strasse 23**
**W-4358 Haltern(DE)**

(74) Vertreter: **Cohausz & Florack Patentanwälte**
**Postfach 14 01 61 Schumannstrasse 97**
**W-4000 Düsseldorf 1(DE)**

(54) **Bandförderer.**

㊼ Die Erfindung bezieht sich auf einen Bandförderer bei dem zum Zwecke der leichten Montage und Demontage des über zweiseitige Umlenkrollen 3,7 geführten Endlosbandes 9 eine Umlenkrolle 7 in einem Auszug 4 eines zwischen dem Obertrum und Untertrum des Endlosbandes 9 angeordneten offenen Rahmens 1 gelagert ist. Der offene Rahmen 1 ist mit in Bandlängsrichtung verlaufenden, seitlich beabstandeten Schienen bestückt, die das Endlosband 9 zwischen den beiden seitlichen Längsträgern des Ständers 1 stützen. Der Rahmen 1 ist nur an einer Seite nach Art eines Kragarmes von einem Ständer 11a-13b getragen, so daß sich nach Entspannen des Auszuges 4 das Endlosband 9 zu der ständerfreien Seite hin abziehen läßt und von dieser Seite auch montieren läßt.

Fig.1

EP 0 489 278 A1

Die Erfindung bezieht sich auf einen Bandförderer mit einem über zwei endseitige Umlenkrollen geführten Endlosband, bei dem die Umlenkrollen und den Obertrum des Endlosbandes zwischen den Umlenkrollen tragende Stützmittel von einem Ständer getragen sind.

Bei einem bekannten Bandförderer dieser Art besteht der Ständer aus einem Fuß und vom Fuß getragenen aufrechtstehenden Seitenteilen, die im oberen Bereich jeweils einen sich über die gesamte Länge des Bandförderers erstreckenden Träger für die Lager der Umlenkrollen und das Stützmittel tragen, das als ein sich über die gesamte Länge des Bandförderers erstreckendes, im Querschnitt U-förmiges auf dem Kopf stehendes Stützblech ausgebildet ist. Ein solcher Bandförderer ist nicht für alle Einsatzzwecke geeignet, insbesondere dann nicht optimal, wenn er wegen des zu transportierenden Gutes, beispielsweise Lebensmittel, regelmäßig gereinigt werden muß. Mit aufliegendem Band ist nämlich die Reinigung kaum befriedigend durchzuführen.

Der Erfindung liegt die Aufgabe zugrunde, einen Bandförderer zu schaffen, der sich leicht reinigen läßt.

Diese Aufgabe wird erfindungsgemäß bei einem Bandförderer der eingangs genannten Art dadurch gelöst, daß zwischen dem Ober- und Untertrum des Endlosbandes ein offener Rahmen mit die Stützmittel bildenden, in Bandlängsrichtung verlaufenden seitlich beabstandeten Schienen vorgesehen ist, an dessen beiden Enden die Endlosrollen gelagert sind und der nach Art eines Kragarmes an nur einer Längsseite von einem Ständer getragen ist. Dabei sollte vorzugsweise eine Umlenkrolle, insbesondere eine antriebslose Umlenkrolle, von einem Auszug des Rahmens getragen sein, der vorzugsweise mittels einer Schnellspannvorrichtung aus einer eingezogenen Montagestellung in die ausgefahrene Betriebsstellung überführbar ist. Für die Feinjustierung einer Umlenkrolle kann dieser an jedem Ende eine Feineinstellung im Auszug zugeordnet sein.

Bei dem erfindungsgemäßen Bandförderer ist die Demontage des Endlosbandes ohne große Montagearbeiten möglich. Nach Entspannen einer Spannrolle, insbesondere der von einem Auszug getragenen Umlenkrolle, kann das Band zu der ständerfreien Seite abgezogen werden. Der Rahmen mit den Schienen und den Umlenkrollen ist dann frei zugänglich und läßt sich leicht reinigen. Nicht länger gibt es schwer zugängliche Schmutznester.

Im folgenden wird die Erfindung anhand einer ein Ausführungsbeispiel eines Bandförderers darstellenden Zeichnung näher erläutert. Im einzelnen zeigen:

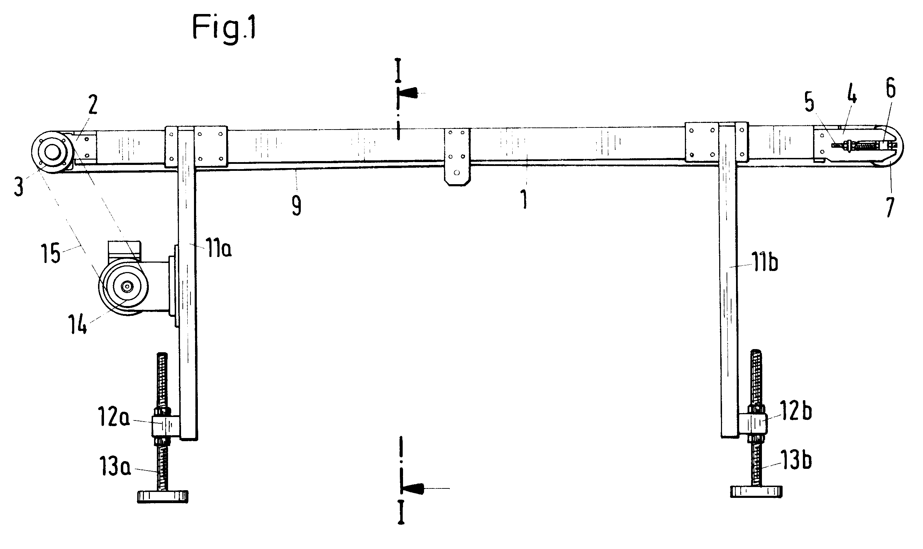

Figur 1     den Bandförderer in Seitenansicht,

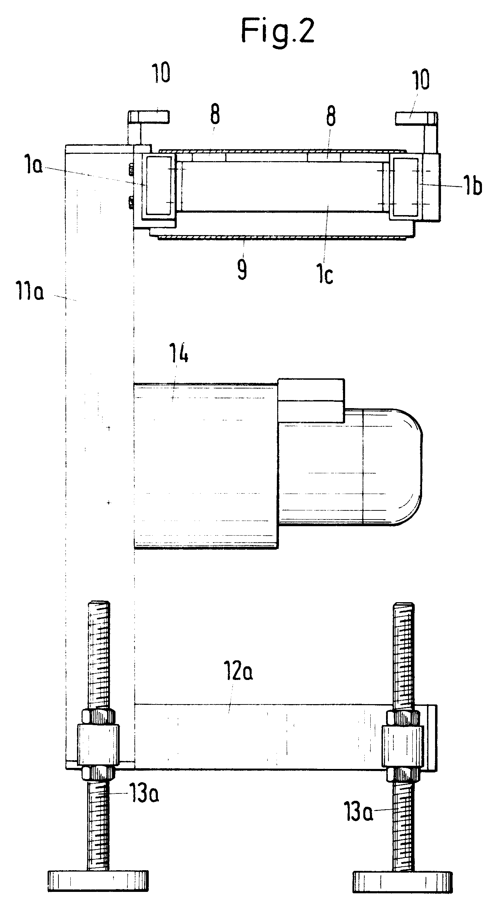

Figur 2     den Bandförderer im Querschnitt nach der Linie I-I der Figur I in einer zu Figur 1 vergrößerten Darstellung,

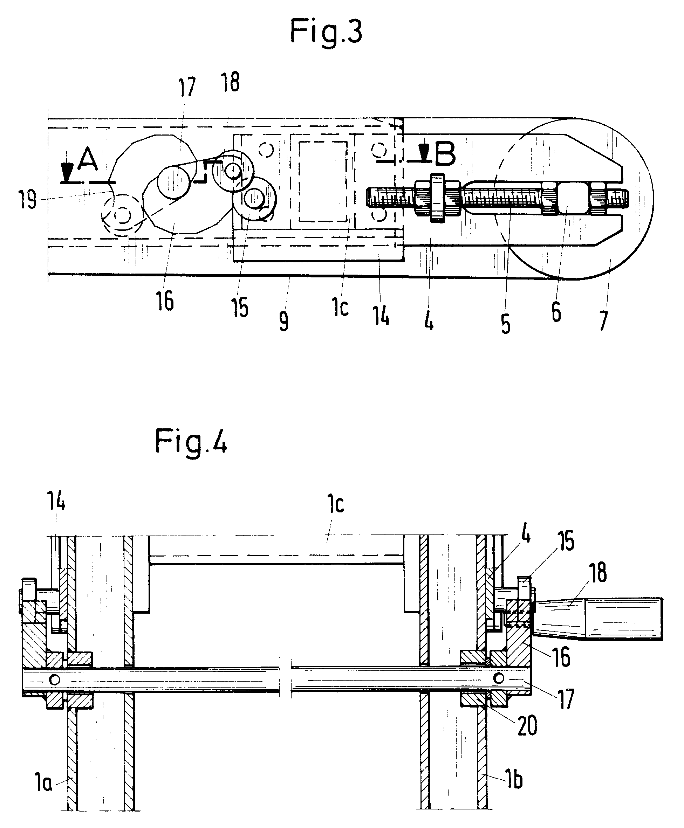

Figur 3     einen Auszug am Bandförderer gemäß Figur 1 mit einer Umlenkrolle in Seitenansicht in zu Figur 1 vergrößerter Darstellung.

**und**

Figur 4     den Auszug gemäß Figur 3 im Querschnitt nach Linie A-B der Figur 3.

Der in der Zeichnung dargestellte Bandförderer weist einen offenen rechteckförmigen Rahmen 1 aus einem im Querschnitt rechteckförmigen Hohlkammerprofil auf. An einem Ende des Rahmens 1 sind nicht verstellbare Lagerböcke 2 für eine angetriebene Umlenkrolle 3 und am anderen Ende ein Auszug 4 mit einer Feineinstellung 5 für Lagerböcke 6 einer antriebslosen Umlenkrolle 7 angeordnet. Zwischen den Längsträgern 1a,1b des Rahmens 1 und mit Abstand zu diesen und voneinander verlaufen Schienen 8, die an den kopfseitigen Trägern 1c,1d des Rahmens 1 befestigt sind. Die oberen Seiten des Kastenprofils des Rahmens 1 und der Schienen 8 liegen in einer Ebene und stützen ein über die Umlenkrollen 3,7 geführtes Transportband 9 ab. Die seitlichen Träger 1a,1b tragen oberhalb der Transportebene des Förderbandes 9 wirksame seitliche Führungen 10 für das zu transportierende Gut.

Der Rahmen 1 ist auf nur einer Seite von einem zweiteiligen Ständer getragen, dessen jeder Teil aus einer Säule 11a,11b und einem Fuß 12a,12b mit höheneinstellbaren Stützen 13a,13b besteht. Die Säule 11a trägt ferner einen Antriebsmotor 14, der über einen Keilriemenantrieb 15 die Umlenkrolle 3 antreibt.

Der Auszug 4 für die nicht angetriebene Rolle 7 ist auf dem Rahmen 1 verschiebbar mit Schuhen 14 gelagert und geführt und trägt auf jeder Seite ein Widerlager 15 in Form einer Rolle, das mit einer Exzenterscheibe 16 zusammenwirkt. Die Exzenterscheibe 16 ist am Rahmen 1 in einem Schwenklager 17 gelagert und mittels eines Handgriffes 18 aus der dünn gezeichneten Lage, in der das Band entspannt ist, in die dick gezeichnete Lage verschwenkbar, in der das Widerlager 15 in eine Ausnehmung 19 am Umfang der Exzenterscheibe 16 einrastet. Auf diese Art und Weise kann das Endlosband 9 für den Betrieb schnell gespannt und für die Montage schnell entspannt werden. Die Feinjustierung erfolgt mittels der Stellschrauben an der Feineinstellung 5.

**Patentansprüche**

1.  Bandförderer mit einem über zwei endseitige Umlenkrollen (3,7) geführten Endlosband, bei dem die Umlenkrollen (3,7) und den Obertrum des Endlosbandes (9) zwischen den Umlenkrollen (3,7) tragende Stützmittel (8) von einem Ständer (11a,11b,12a,12b,13a,13b) getragen sind,

**dadurch gekennzeichnet,** daß zwischen dem Ober- und Untertrum des Endlosbandes (9) ein offener Rahmen (1) mit die Stützmittel bildenden, in Bandlängsrichtung verlaufenden, seitlich beabstandeten Schienen (8) vorgesehen ist, an dessen beiden Enden die Umlenkrollen (3,7) gelagert sind und der nach Art eines Kragarmes an nur einer Längsseite von dem Ständer (11a,11b,12a,12b,13a,13b) getragen ist.

2. Bandförderer nach Anspruch 1,
**dadurch gekennzeichnet,** daß eine Spannrolle, insbesondere eine vorzugsweise antriebslose Umlenkrolle (7) von einem Auszug (4) des Rahmens (1) getragen ist.

3. Bandförderer nach Anspruch 2,
**dadurch gekennzeichnet,** daß der Auszug (4) mittels einer Schnellspannvorrichtung (15-19) aus seiner eingezogenen Montagestellung in die ausgefahrene Betriebsstellung überführbar ist.

4. Bandförderer nach einem der Ansprüche 1 bis 3,
**dadurch gekennzeichnet,** daß jedem Ende einer Umlenkrolle (3,7), insbesondere der im Auszug (4) gelagerten Umlenkrolle (7) eine Feineinstellung (5) im Auszug (4) zugeordnet ist.

Fig.1

# Fig.2

# Fig.3

# Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-700 146 (OTTO ZIMMERMANN) <br> * das ganze Dokument * <br> --- | 1-4 | B65G15/00 |
| X | NL-A-7 018 614 (THEODORUS ANDREAS SMITS) <br> * Ansprüche 6,7 * <br> --- | 1 | |
| A | GB-A-1 561 429 (ASEA AB) <br> * das ganze Dokument * <br> --- | 1 | |
| A | DE-C-829 573 (ORENSTEIN-KOPPEL UND LÜBECKER MASCHINENBAU AG) <br> * das ganze Dokument * <br><br> ----- | 1 | |
| | | | **RECHERCHIERTE SACHGEBIETE (Int. Cl.5)** <br><br> B65G |

Der vorliegende Recherchenbericht wurde für alle Patentansprüche erstellt

| Recherchenort | Abschlußdatum der Recherche | Prüfer |
|---|---|---|
| DEN HAAG | 05 MAERZ 1992 | BEERNAERT J.E. |

EPO FORM 1503 03.82 (P0403)